(19) Europäisches Patentamt
European Patent Office
Office européen des brevets

(11) EP 0 984 689 B1

(12) **EUROPÄISCHE PATENTSCHRIFT**

(45) Veröffentlichungstag und Bekanntmachung des Hinweises auf die Patenterteilung:
**06.11.2002 Patentblatt 2002/45**

(21) Anmeldenummer: **98930699.8**

(22) Anmeldetag: **18.05.1998**

(51) Int Cl.[7]: **A01N 37/50**
// (A01N37/50, 37:38)

(86) Internationale Anmeldenummer:
**PCT/EP98/02914**

(87) Internationale Veröffentlichungsnummer:
**WO 98/053686 (03.12.1998 Gazette 1998/48)**

(54) **FUNGIZIDE MISCHUNG**
FUNGICIDAL MIXTURE
MELANGE FONGICIDE

(84) Benannte Vertragsstaaten:
**AT BE CH DE DK ES FI FR GB GR IE IT LI NL PT SE**
Benannte Erstreckungsstaaten:
**SI**

(30) Priorität: **30.05.1997 DE 19722656**

(43) Veröffentlichungstag der Anmeldung:
**15.03.2000 Patentblatt 2000/11**

(73) Patentinhaber: **BASF AKTIENGESELLSCHAFT**
**67056 Ludwigshafen (DE)**

(72) Erfinder:
- **SCHELBERGER, Klaus**
  **D-67161 Gönnheim (DE)**
- **SCHERER, Maria**
  **D-76829 Landau (DE)**
- **SAUR, Reinhold**
  **D-67459 Böhl-Iggelheim (DE)**
- **SAUTER, Hubert**
  **D-68167 Mannheim (DE)**
- **BIRNER, Erich**
  **D-67317 Altleiningen (DE)**
- **LEYENDECKER, Joachim**
  **D-68526 Ladenburg (DE)**
- **HAMPEL, Manfred**
  **D-67435 Neustadt (DE)**
- **AMMERMANN, Eberhard**
  **D-64646 Heppenheim (DE)**
- **LORENZ, Gisela**
  **D-67434 Neustadt (DE)**
- **STRATHMANN, Siegfried**
  **D-67117 Limburgerhof (DE)**

(56) Entgegenhaltungen:
**WO-A-96/03047** **WO-A-97/42821**
**FR-A- 2 742 633**

- **"AZOXYSTROBIN COMPOSITIONS" RESEARCH DISCLOSURE, Nr. 390, 10. Oktober 1996, Seiten 672-4, disclosure no. 390043, XP000639940**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft eine fungizide Mischung, welche

a) ein Phenyl-benzyletherderivat der Formel I.a, I.b oder I.c,

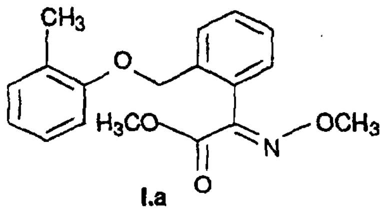
I.a

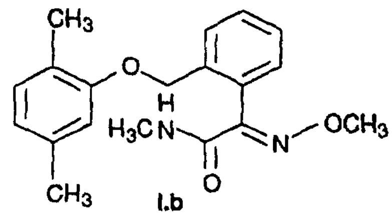
I.b

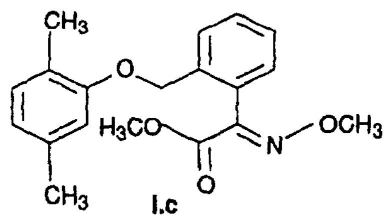
I.c

sowie

b) ein Carbonsäureamid II ausgewählt aus der Gruppe der Verbindungen IIa und IIb

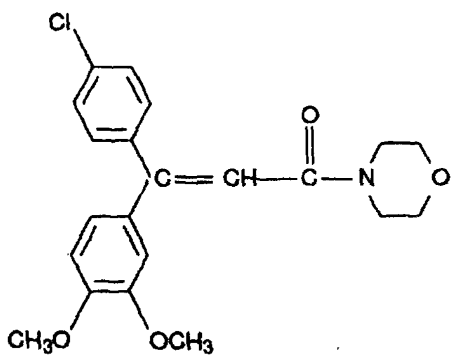
(IIa)

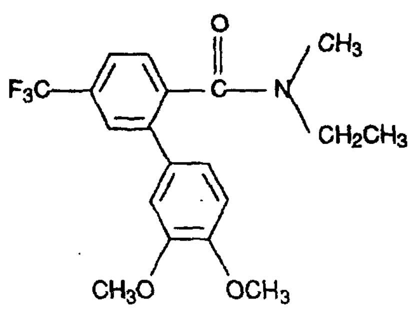
(IIb)

in einer synergistisch wirksamen Menge enthält.

Außerdem betrifft die Erfindung Verfahren zur Bekämpfung von Schadpilzen mit Mischungen der Verbindungen I (I.a, I.b bzw. I.c) und II (II.a bzw. II.b) und die Verwendung der Verbindung I und der Verbindung II zur Herstellung derartiger Mischungen.

Die Verbindungen der Formel I, ihre Herstellung und ihre Wirkung gegen Schadpilze sind aus der Literatur

bekannt (EP-A 253 213; EP-A 254 426; EP-A 398 692).

Ebenfalls bekannt sind die Carbonsäureamide II [IIa: common name: Dimethomorph, EP-A 120 321; IIb: proposed common name: Flumetover, AGROW Nr. 243, 22 (1995)], deren Herstellung und deren Wirkung gegen Schadpilze.

Im Hinblick auf eine Senkung der Aufwandmengen und eine Verbesserung des Wirkungsspektrums der bekannten Verbindungen lagen der vorliegenden Erfindungen Mischungen als Aufgabe zugrunde, die bei verringerter Gesamtmenge an ausgebrachten Wirkstoffen eine verbesserte Wirkung gegen Schadpilzen aufweisen (synergistische Mischungen).

Demgemäß wurden die eingangs definierten Mischungen gefunden. Es wurde außerdem gefunden, daß sich bei gleichzeitiger gemeinsamer oder getrennter Anwendung der Verbindung I und der Verbindung II oder bei Anwendung der Verbindungen I und der Verbindungen II nacheinander Schadpilze besser bekämpfen lassen als mit den Einzelverbindungen.

Die Verbindungen I und II sind wegen des basischen Charakters in der Lage, mit anorganischen oder organischen Säuren oder mit Metallionen Salze oder Addukte zu bilden.

Beispiele für anorganische Säuren sind Halogenwasserstoffsäuren wie Fluorwasserstoff, Chlorwasserstoff, Bromwasserstoff und Jodwasserstoff, Schwefelsäure, Phosphorsäure und Salpetersäure.

Als organischen Säuren kommen beispielsweise Ameisensäure, Kohlensäure und Alkansäuren wie Essigsäure, Trifluoressigsäure, Trichloressigsäure und Propionsäure sowie Glycolsäure, Thiocyansäure, Milchsäure, Bernsteinsäure, Zitronensäure, Benzoesäure, Zimtsäure, Oxalsäure, Alkylsulfonsäuren (Sulfonsäuren mit geradkettigen oder verzweigten Alkylresten mit 1 bis 20 Kohlenstoffatomen), Arylsulfonsäuren oder -disulfonsäuren (aromatische Reste wie Phenyl und Naphthyl welche eine oder zwei Sulfonsäuregruppen tragen), Alkylphosphonsäuren (Phosphonsäuren mit geradkettigen oder verzweigten Alkylresten mit 1 bis 20 Kohlenstoffatomen), Arylphosphonsäuren oder -diphosphonsäuren (aromatische Reste wie Phenyl und Naphthyl welche eine oder zwei Phosphorsäurereste tragen), wobei die Alkyl- bzw. Arylreste weitere Substituenten tragen können, zB. p-Toluolsulfonsäure, Salizylsäure, p-Aminosalizylsäure, 2-Phenoxybenzoesäure, 2-Acetoxybenzoesäure etc.

Als Metallionen kommen insbesondere die Ionen der Elemente der zweiten Hauptgruppe, insbesondere Calzium und Magnesium, der dritten und vierten Hauptgruppe, insbesondere Aluminium, Zinn und Blei, sowie der ersten bis achten Nebengruppe, insbesondere Chrom, Mangan, Eisen, Kobalt, Nickel, Kupfer, Zink und andere in Betracht. Besonders bevorzugt sind die Metallionen der Elemente der Nebengruppen der vierten Periode. Die Metalle können dabei in den verschiedenen ihnen zukommenden Wertigkeiten vorliegen.

Bevorzugt setzt man bei der Bereitstellung der Mischungen die reinen Wirkstoffe I und II ein, denen man je nach Bedarf weitere Wirkstoffe gegen Schadpilze oder andere Schädlinge wie Insekten, Spinntiere oder Nematoden, oder auch herbizide oder wachstumsregulierende Wirkstoffe oder Düngemittel beimischen kann.

Die Mischungen aus den Verbindungen I und II bzw. die Verbindungen I und II gleichzeitig, gemeinsam oder getrennt angewandt, zeichnen sich durch eine hervorragende Wirkung gegen ein breites Spektrum von pflanzenpathogenen Pilzen, insbesondere aus der Klasse der Ascomyceten, Basidiomyceten, Phycomyceten und Deuteromyceten aus. Sie sind z.T. systemisch wirksam und können daher auch als Blatt- und Bodenfungizide eingesetzt werden.

Besondere Bedeutung haben sie für die Bekämpfung einer Vielzahl von Pilzen an verschiedenen Kulturpflanzen wie Baumwolle, Gemüsepflanzen (z.B. Gurken, Bohnen, Tomaten, Kartoffeln und Kürbisgewächse), Gerste, Gras, Hafer, Bananen, Kaffee, Mais, Obstpflanzen, Reis, Roggen, Soja, Wein, Weizen, Zierpflanzen, Zukkerrohr sowie an einer Vielzahl von Samen.

Insbesondere eignen sie sich zur Bekämpfung der folgenden pflanzenpathogenen Pilze: Erysiphe graminis (echter Mehltau) an Getreide, Erysiphe cichoracearum und Sphaerotheca fuliginea an Kürbisgewächsen, Podosphaera leucotricha an Äpfeln, Uncinula necator an Reben, Puccinia-Arten an Getreide, Rhizoctonia-Arten an Baumwolle, Reis und Rasen, Ustilago-Arten an Getreide und Zuckerrohr, Venturia inaequalis (Schorf) an Äpfeln, Helminthosporium-Arten an Getreide, Septoria nodorum an Weizen, Botrytis cinera (Grauschimmel) an Erdbeeren, Gemüse, Zierpflanzen und Reben, Cercospora arachidicola an Erdnüssen, Pseudocercosporella herpotrichoides an Weizen und Gerste, Pyricularia oryzae an Reis, Phytophthora infestans an Kartoffeln und Tomaten, Plasmopara viticola an Reben, Pseudocercosporella-Arten in Hopfen und Gurken, Alternaria-Arten an Gemüse und Obst, Mycosphaerella-Arten in Bananen sowie Fusarium- und Verticillium-Arten.

Sie sind außerdem im Materialschutz (z.B. Holzschutz) anwendbar, beispielsweise gegen Paecilomyces variotii.

Die Verbindungen I und II können gleichzeitig, und zwar gemeinsam oder getrennt, oder nacheinander aufgebracht werden, wobei die Reihenfolge bei getrennter Applikation im allgemeinen keine Auswirkung auf den Bekämpfungserfolg hat.

Die Verbindungen I und II werden üblicherweise in einem Gewichtsverhältnis von 20:1 bis 0,005:1, vorzugsweise 10:1 bis 0,0,1:1, insbesondere 5:1 bis 0,2:1 angewendet.

Die Aufwandmengen der erfindungsgemäßen Mischungen liegen, vor allem bei landwirtschaftlichen Kulturflächen, je nach Art des gewünschten Effekts bei 0,01 bis 8 kg/ha, vorzugsweise 0,1 bis 5 kg/ha, insbesondere 0,5 bis 3,0 kg/ha.

Die Aufwandmengen liegen dabei für die Verbindungen I bei 0,01 bis 0,5 kg/ha, vorzugsweise 0,05 bis 0,5 kg/ha, insbesondere 0,05 bis 0,3 kg/ha.

Die Aufwandmengen für die Verbindungen II liegen entsprechend bei 0,005 bis 1 kg/ha, vorzugsweise 0,1 bis 0,5 kg/ha, insbesondere 0,1 bis 0,3 kg/ha.

Bei der Saatgutbehandlung werden im allgemeinen Aufwandmengen an Mischung von 0,001 bis 250 g/kg Saatgut, vorzugsweise 0,01 bis 100 g/kg, insbesondere 0,01 bis 50 g/kg verwendet.

Sofern für Pflanzen pathogene Schadpilze zu bekämpfen sind, erfolgt die getrennte oder gemeinsame Applikation der Verbindungen I und II oder der Mischungen aus den Verbindungen I und II durch Besprühen oder Bestäuben der Samen, der Pflanzen oder der Böden vor oder nach der Aussaat der Pflanzen oder vor oder nach dem Auflaufen der Pflanzen.

Die erfindungsgemäßen fungiziden synergistischen Mischungen bzw. die Verbindungen I und II können beispielsweise in Form von direkt versprühbaren Lösungen, Pulver und Suspensionen oder in Form von hochprozentigen wäßrigen, öligen oder sonstigen Suspensionen, Dispersionen, Emulsionen, Öldispersionen, Pasten, Stäubemitteln, Streumitteln oder Granulaten aufbereitet und durch Versprühen, Vernebeln, Verstäuben, Verstreuen oder Gießen angewendet werden. Die Anwendungsform ist abhängig vom Verwendungszweck; sie soll in jedem Fall eine möglichst feine und gleichmäßige Verteilung der erfindungsgemäßen Mischung gewährleisten.

Die Formulierungen werden in an sich bekannter Weise hergestellt, z.B. durch Zugabe von Lösungsmitteln und/oder Trägerstoffen. Den Formulierungen werden üblicherweise inerte Zusatzstoffe wie Emulgiermittel oder Dispergiermittel beigemischt.

Als oberflächenaktive Stoffe kommen die Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Lauryletherund Fettalkoholsulfaten, sowie Salze sulfatierter Hexa-, Heptaund Octadecanole oder Fettalkoholglycolethern, Kondensationsprodukte von sulfoniertem Naphthalin und seinen Derivaten mit Formaldehyd. Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenol- oder Tributylphenylpolyglycolether, Alkylarylpolyetheralkohole, Isotridecylalkohol, Fettalkoholethylenoxid- Kondensate, ethoxyliertes Rizinusöl, Polyoxyethylenalkylether oder Polyoxypropylen, Laurylalkoholpolyglycoletheracetat, Sorbitester, Lignin-Sulfitablaugen oder Methylcellulose in Betracht.

Pulver Streu- und Stäubemittel können durch Mischen oder gemeinsames Vermahlen der Verbindungen I oder II oder der Mischung aus den Verbindungen I und II mit einem festen Trägerstoff hergestellt werden.

Granulate (z.B. Umhüllungs-, Imprägnierungs- oder Homogengranulate) werden üblicherweise durch Bindung des Wirkstoffs oder der Wirkstoffe an einen festen Trägerstoff hergestellt.

Als Füllstoffe bzw. feste Trägerstoffe dienen beispielsweise Mineralerden wie Silicagel, Kieselsäuren, Kieselgele, Silikate, Talkum, Kaolin, Kalkstein, Kalk, Kreide, Bolus, Löß, Ton, Dolomit, Diatomeenerde, Calcium- und Magnesiumsulfat, Magnesiumoxid, gemahlene Kunststoffe, sowie Düngemittel wie Ammoniumsulfat, Ammoniumphosphat, Ammoniumnitrat, Harnstoffe und pflanzliche Produkte wie Getreidemehl, Baumrinden-, Holz- und Nußschalenmehl, Cellulosepulver oder andere feste Trägerstoffe.

Die Formulierungen enthalten im allgemeinen 0,1 bis 95 Gew.-%, vorzugsweise 0,5 bis 90 Gew.-% einer der Verbindungen I oder II bzw. der Mischung aus den Verbindungen I und II. Die Wirkstoffe werden dabei in einer Reinheit von 90% bis 100%, vorzugsweise 95% bis 100% (nach NMR- oder HPLC-Spektrum) eingesetzt.

Die Anwendung der Verbindungen I oder II, der Mischungen oder der entsprechenden Formulierungen erfolgt so, daß man die Schadpilze, deren Lebensraum oder die von ihnen freizuhaltenden Pflanzen, Samen, Böden, Flächen, Materialien oder Räume mit einer fungizid wirksamen Menge der Mischung, bzw. der Verbindungen I und II bei getrennter Ausbringung, behandelt.

Die Anwendung kann vor oder nach dem Befall durch die Schadpilze erfolgen.

Anwendungsbeispiel

Die synergistische Wirkung der erfindungsgemäßen Mischungen ließ sich durch die folgenden Versuche zeigen:

Die Wirkstoffe wurden getrennt oder gemeinsam als 10%ige Emulsion in einem Gemisch aus 63 Gew.-% Cyclohexanon und 27 Gew.-% Emulgator aufbereitet und entsprechend der gewünschten Konzentration mit Wasser verdünnt.

Anwendungsbeispiel 1 - Wirksamkeit gegen *Phytophthora infestans* an Tomaten

Blätter von Topfpflanzen der Sorte "Große Fleischtomate" wurden mit einer wäßrigen Suspension, die aus einer Stammlösung aus 10 % Wirkstoff, 63 % Cyclohexanon und 27 % Emulgiermittel angesetzt wurde, bis zur Tropfnässe besprüht. Am folgenden Tag wurden die Blätter mit einer wäßrigen Zoosporenaufschwemmung von *Phytophthora infestans* infiziert. Anschließend wurden die Pflanzen in einer wasserdampfgesättigten Kammer bei Temperaturen zwischen 16 und 18°C aufgestellt. Nach 6 Tagen hatte sich die Krautfäule auf den unbehandelten, jedoch infizierten Kontrollpflanzen so stark entwickelt, daß der Befall visuell in % ermittelt werden konnte.

Die Auswertung erfolgte durch Feststellung der befallenen Blattflächen in Prozent. Diese Prozent-Werte wurden in Wirkungsgrade umgerechnet. Der Wirkungsgrad (**W**) wurde nach der Formel von Abbot wie folgt bestimmt:

$$W = (1 - \alpha)\cdot 100/\beta$$

$\alpha$ entspricht dem Pilzbefall der behandelten Pflanzen in % und

$\beta$ entspricht dem Pilzbefall der unbehandelten (Kontroll-) Pflanzen in %

Bei einem Wirkungsgrad von 0 entspricht der Befall der behandelten Pflanzen demjenigen der unbehandelten Kontrollpflanzen; bei einem Wirkungsgrad von 100 wiesen die behandelten Pflanzen keinen Befall auf.

Die zu erwartenden Wirkungsgrade der Wirkstoffmischungen wurden nach der Colby Formel [R.S. Colby, Weeds 15, 20-22 (1967)] ermittelt und mit den beobachteten Wirkungsgraden verglichen.

$$\text{Colby Formel: } E = x + y - x\cdot y/100$$

E zu erwartender Wirkungsgrad, ausgedrückt in % der unbehandelten Kontrolle, beim Einsatz der Mischung aus den Wirkstoffen A und B in den Konzentrationen a und b

x der Wirkungsgrad, ausgedrückt in % der unbehandelten Kontrolle, beim Einsatz des Wirkstoffs A in der Konzentration a

y der Wirkungsgrad, ausgedrückt in % der unbehandelten Kontrolle, beim Einsatz des Wirkstoffs B in der Konzentration b

Die Ergebnisse der Versuche sind den nachstehenden Tabellen 2 und 3 zu entnehmen.

Tabelle 2

| Bsp. | Wirkstoff | Wirkstoffkonzentration in der Spritzbrühe in ppm | Wirkungsgrad in % der unbehandelten Kontrolle |
|---|---|---|---|
| 1 V | Kontrolle (unbehandelt) | (100 % Befall) | 0 |
| 2 V | Ia | 1.25 | 20 |
| | | 0.31 | 0 |
| 3 V | Ib | 0.08 | 0 |
| 4 V | IIa = Dimethomorph | 1.25 | 80 |
| | | 0.31 | 40 |
| | | 0.08 | 40 |
| 5 V | IIb = Flumetover | 1.25 | 10 |
| | | 0.31 | 0 |
| | | 0.08 | 0 |

Tabelle 3

| erfindungsgemäße Mischungen | beobachteter Wirkungsgrad | berechneter Wirkungsgrad*) |
|---|---|---|
| 1,25 ppm Ia + 1,25 ppm IIa (Mischung 1:1) | 95 | 84 |
| 0,31 ppm Ia + 0,31 ppm IIa (Mischung 1:1) | 70 | 40 |
| 1,25 ppm Ia + 1,25 ppm IIb (Mischung 1:1) | 75 | 28 |
| 0,31 ppm Ia + 0,31 ppm IIb (Mischung 1:1) | 40 | |
| 0,08 ppm Ib + 0,08 ppm IIa) (Mischung 1:1) | 90 | 76 |
| 0,08 ppm Ib + 0,08 ppm IIb (Mischung 1:1) | 95 | 60 |

*) berechnet nach der Colby-Formel

Aus den Ergebnissen des Versuches geht hervor, daß der beobachtete Wirkungsgrad in allen Mischungsverhältnissen höher ist, als nach der Colby-Formel vorausberechnete Wirkungsgrad.

## Patentansprüche

**1.** Fungizide Mischung, enthaltend

a) ein Phenyl-benzyletherderivat der Formel I.a, I.b oder I.c,

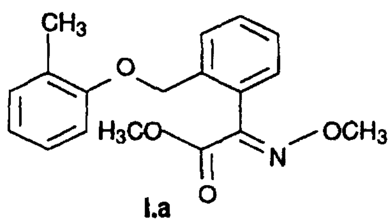

I.a

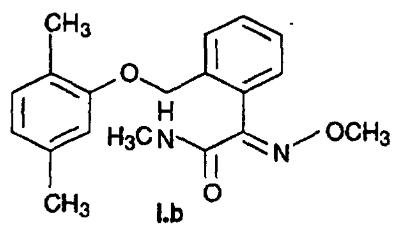

I.b

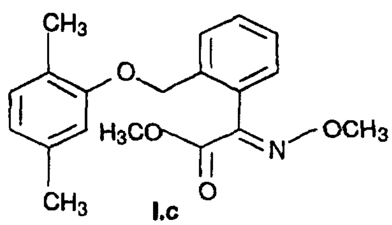

I.c

sowie

b) ein Carbonsäureamid II ausgewählt aus der Gruppe der Verbindungen IIa und IIb

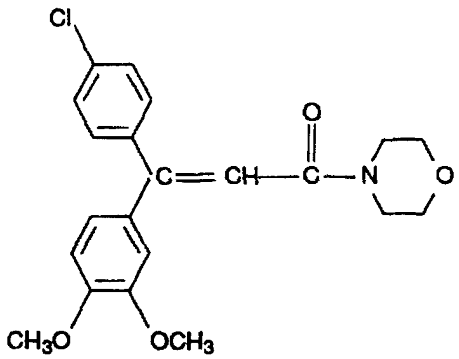

(IIa)

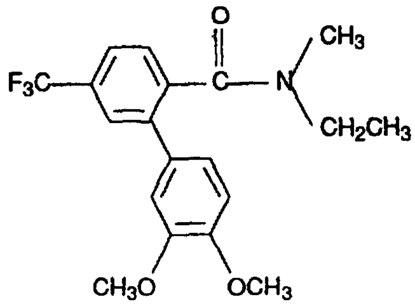

(IIb)

in einer synergistisch wirksamen Menge.

2. Fungizide Mischung nach Anspruch 1, enthaltend das Carbonsäureamid IIa.

3. Fungizide Mischung nach Anspruch 1, enthaltend das Carbonsäureamid IIb.

4. Fungizide Mischung nach Anspruch 1, **dadurch gekennzeichnet, daß** das Gewichtsverhältnis der Verbindung I zu der Verbindung II 20:1 bis 0,1:2 beträgt.

5. Verfahren zur Bekämpfung von Schadpilzen, **dadurch gekennzeichnet, daß** man die Schadpilze, deren Lebensraum oder die von ihnen freizuhaltenden Pflanzen, Samen, Böden, Flächen, Materialien oder Räume mit einer Verbindung der Formel I gemäß Anspruch 1 und der Verbindung der Formel II gemäß Anspruch 1 behandelt.

6. Verfahren nach Anspruch 5, **dadurch gekennzeichnet, daß** man die Verbindung I gemäß Anspruch 1 und die Verbindung II gemäß Anspruch 1 gleichzeitig gemeinsam oder getrennt oder nacheinander ausbringt.

7. Verfahren nach Anspruch 5, **dadurch gekennzeichnet, daß** man eine die Schadpilze, deren Lebensraum oder die von ihnen freizuhaltenden Pflanzen, Samen, Böden, Flächen, Materialien oder Räume mit 0,01 bis 0,5 kg/ha einer Verbindung I gemäß Anspruch 1 behandelt.

8. Verfahren nach Anspruch 5, **dadurch gekennzeichnet, daß** man die Schadpilze, deren Lebensraum oder die von ihnen freizuhaltenden Pflanzen, Samen, Böden, Flächen, Materialien oder Räume mit 0,05 bis 1 kg/ha einer Verbindung II gemäß Anspruch 1 behandelt.

9. Verwendung einer Verbindung I gemäß Anspruch 1 zur Herstellung von fungizid wirksamen synergistischen Mischungen gemäß Anspruch 1.

10. Verwendung der Verbindungen II gemäß Anspruch 1 zur Herstellung von fungizid wirksamen synergistischen Mischungen gemäß Anspruch 1.

11. Mittel nach Anspruch 1, das in zwei Teilen konditioniert ist, wobei der eine Teil eine Verbindung der Formel I gemäß Anspruch 1 in einem festen oder flüssigen Träger enthält und der andere Teil eine Verbindung der Formel II gemäß

Anspruch 1 in einem festen oder flüssigen Träger enthält.

## Claims

**1.** A fungicidal mixture, comprising

a) a phenyl benzyl ether derivate of the formula I.a, I.b or I.c,

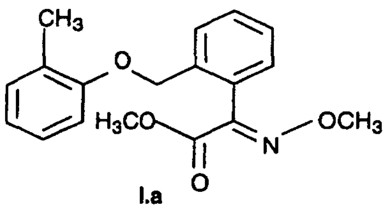

I.a

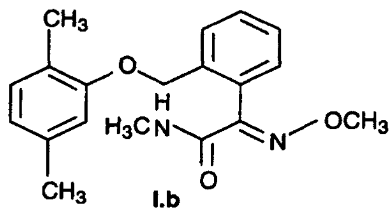

I.b

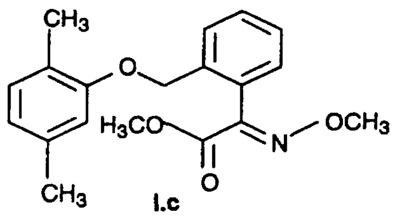

I.c

and

b) a carboxamide II selected from the group of the compounds IIa and IIb

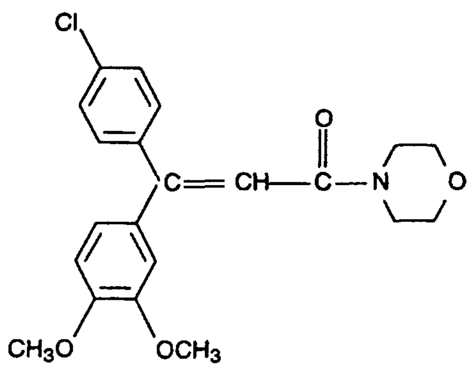

(IIa)

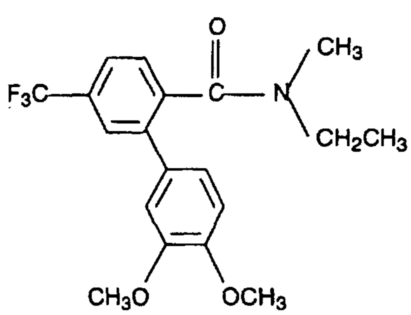

(IIb)

in a synergistically effective amount.

**2.** A fungicidal mixture as claimed in claim 1, comprising the carboxamide IIa.

**3.** A fungicidal mixture as claimed in claim 1, comprising the carboxamide IIb.

**4.** A fungicidal mixture as claimed in claim 1, wherein the weight ratio of the compound I to the compound II is 20:1 to 0.1:2.

**5.** A method for controlling harmful fungi, which comprises treating the harmful fungi, their habitat, or the plants, seeds, soils, areas, materials or spaces to be kept free from them with a compound of the formula I as set forth in claim 1 and the compound of the formula II as set forth in claim 1.

**6.** A method as claimed in claim 5, wherein the compound I as set forth in claim 1 and the compound II as set forth in claim 1 are applied simultaneously, that is either together or separately, or in succession.

**7.** A method as claimed in claim 5, wherein the harmful fungi, their habitat, or the plants, seeds, soils, areas, materials or spaces to be kept free from them are treated with 0.01 to 0.5 kg/ha of a compound I as set forth in claim 1.

**8.** A method as claimed in claim 5, wherein the harmful fungi, their habitat, or the plants, seeds, soils, areas, materials or spaces to be kept free from them are treated with 0.05 to 1 kg/ha of a compound II as set forth in claim 1.

**9.** The use of a compound I as set forth in claim 1 for preparing fungicidally effective synergistic mixtures as claimed in claim 1.

**10.** The use of the compounds II as set forth in claim 1 for preparing fungicidally effective synergistic mixtures as claimed in claim 1.

**11.** A composition as claimed in claim 1 which is conditioned in two parts, one part comprising a compound of the formula I as set forth in claim 1 in a solid or liquid carrier, and the other part comprising a compound of the formula II as set forth in claim 1 in a solid or liquid carrier.

## Revendications

**1.** Mélange fongicide contenant

a) un dérivé d'éther phénylbenzylique de formule I.a, I.b ou I.c

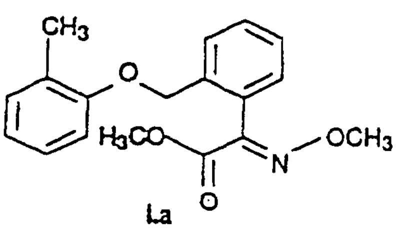
I.a

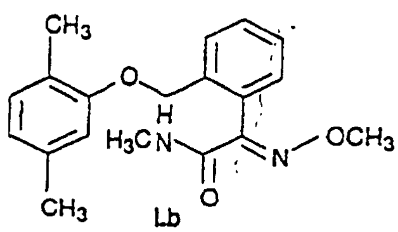
I.b

et

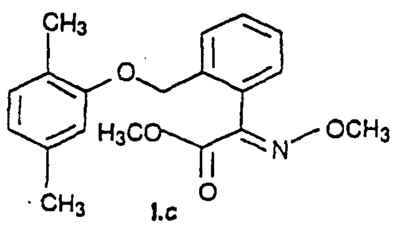
I.c

b) un carboxamide II choisi parmi les composés IIa et IIb

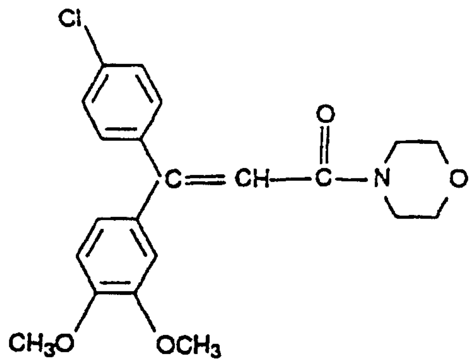

(IIa)

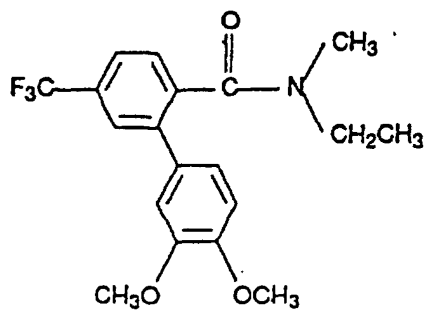

(IIb)

en quantité synergétique efficace.

2. Mélange fongicide selon la revendication 1, contenant le carboxamide Ha.

3. Mélange fongicide selon la revendication 1, contenant le carboxamide IIb.

4. Mélange fongicide selon la revendication 1, **caractérisé par le fait que** les proportions relatives en poids entre le composé I et le composé II vont de 20: 1 à 0,1 :2.

5. Procédé pour combattre les mycètes nuisibles, **caractérisé par le fait que** l'on traite les mycètes nuisibles, leur habitat ou les végétaux, semences, sols, aires, matériaux ou locaux qu'on veut protéger contre les mycètes par un composé de formule I selon la revendication 1 et le composé de formule II selon la revendication 1.

6. Procédé selon la revendication 5, **caractérisé en ce que** l'on applique le composé I de la revendication 1 et le composé II de la revendication 1 en même temps, ensemble ou séparément, ou successivement.

7. Procédé selon la revendication 5, **caractérisé par le fait que** l'on traite les mycètes nuisibles, leur habitat ou les végétaux, semences, sols, aires, matériaux ou locaux qu'on veut protéger contre les mycètes par 0,01 à 0,5 k / ha d'un composé I selon la revendication 1.

8. Procédé selon la revendication 5, **caractérisé par le fait que** l'on traite les mycètes nuisibles, leur habitat ou les végétaux, semences, aires, matériaux ou locaux qu'on veut protéger contre les mycètes par 0,05 à 1 kg/ha d'un composé II selon revendication 1.

9. Utilisation d'un composé I selon la revendication 1, pour la préparation de mélanges fongicides à activité synergétique selon la revendication 1.

10. Utilisation des composés II selon la revendication 1 pour la préparation de mélanges fongicides à activité synergétique selon la revendication 1.

**11.** Produit selon la revendication 1, conditionné en deux parties, l'une de ces parties contenant un composé de formule I selon la revendication 1 dans un véhicule solide ou liquide et l'autre partie un composé de formule II selon la revendication 1 dans un véhicule solide ou liquide.